(19) Europäisches Patentamt / European Patent Office / Office européen des brevets

(11) **EP 3 768 413 B1**

(12) **EUROPÄISCHE PATENTSCHRIFT**

(45) Veröffentlichungstag und Bekanntmachung des Hinweises auf die Patenterteilung:
**22.12.2021 Patentblatt 2021/51**

(51) Int Cl.:
***B01F 7/00*** *(2006.01)*     ***B01F 15/00*** *(2006.01)*
***B01F 15/04*** *(2006.01)*

(21) Anmeldenummer: **19711388.9**

(22) Anmeldetag: **22.03.2019**

(86) Internationale Anmeldenummer:
**PCT/EP2019/057275**

(87) Internationale Veröffentlichungsnummer:
**WO 2019/180223 (26.09.2019 Gazette 2019/39)**

(54) **VERFAHREN ZUR HERSTELLUNG VON BESCHICHTUNGSMITTELZUSAMMENSETZUNGEN MITTELS GRAVIMETRISCHER DOSIERUNG UNTER DURCHMISCHUNG UND ANPASSUNG DER HÖHE DES RÜHRKÖRPERS AN DEN FÜLLSTAND**

METHOD FOR THE PREPARATION OF COATING COMPOSITIONS USING GRAVIMETRIC DOSING MIXING AND ADJUSTING THE HEIGHT OF THE MIXING BODY TO THE LEVEL OF THE CONTENT

PROCÉDÉ DE PRODUCTION DE COMPOSITIONS D'AGENT DE REVÊTEMENT AU MOYEN DU DOSAGE GRAVIMÉTRIQUE PAR MÉLANGE ET PAR AJUSTEMENT DE LA HAUTEUR DU CORPS D'AGITATION AU NIVEAU DE REMPLISSAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.03.2018 EP 18163341**

(43) Veröffentlichungstag der Anmeldung:
**27.01.2021 Patentblatt 2021/04**

(73) Patentinhaber: **BASF Coatings GmbH**
**48165 Münster (DE)**

(72) Erfinder: **BLASER, Alexander**
**48165 Münster (DE)**

(74) Vertreter: **BASF IP Association**
**BASF SE**
**GBI-C006**
**67056 Ludwigshafen (DE)**

(56) Entgegenhaltungen:
**WO-A1-2013/098913       WO-A1-2013/098959**
**DE-A1-102009 044 205    DE-U1-202005 015 439**

EP 3 768 413 B1

## Beschreibung

Die vorliegende Erfindung betrifft ein Verfahren zur Herstellung einer in der Automobilindustrie einsetzbaren Beschichtungsmittelzusammensetzung oder einer Vorstufe davon, wobei das Verfahren wenigstens den Schritt (1) umfasst, nämlich ein Einwiegen aller zur Herstellung der Beschichtungsmittelzusammensetzung oder der Vorstufe davon erforderlichen Komponenten unter Verwendung einer gravimetrischen Dosieranlage mittels wenigstens eines Dosierventils in einen für die Einwaage geeigneten Behälter, wobei die in den Behälter eingewogenen Komponenten während der Dauer der Durchführung von Schritt (1) mittels wenigstens eines Rührkörpers durchmischt werden und während der Durchführung von Schritt (1) eine kontinuierliche Anpassung der Position des wenigstens einen Rührkörpers an den jeweiligen Füllstand innerhalb des Behälters erfolgt, wobei der jeweilige Füllstand durch die Menge und Anzahl der in den Behälter eingewogenen Komponenten vorgegeben wird und die Position des wenigstens einen Rührkörpers der Höhe des Rührkörpers innerhalb des Behälters, gerechnet vom Boden des Behälters, entspricht.

## Stand der Technik

In der Automobilindustrie einsetzbare Beschichtungsmittelzusammensetzungen werden heutzutage sowohl im (groß)industriellem Maßstab als auch im Labormaßstab im Zuge der vorhergehenden Entwicklungsphase in den meisten Fällen manuell hergestellt.

Diese heute noch gängige manuelle Arbeitsweise liegt an der Notwendigkeit, dass bei der Herstellung vieler solcher Beschichtungsmittelzusammensetzungen wie zum Beispiel von Wasserbasislacken ein kontinuierliches Durchmischen der zur Herstellung eingesetzten Komponenten aufgrund von auftretenden Viskositätsänderungen bei der Dosierung erforderlich ist, insbesondere dann, wenn sowohl hydrophile als auch hydrophobe Komponenten eingesetzt werden. Schlimmstenfalls kann es ansonsten zu einem Ausfallen einzelner Komponenten während der Zugabe kommen, beispielsweise bei der Zumischung einer hydrophilen Komponente zu einer hydrophoben Mischung. Eine kontinuierliche Durchmischung mittels Rühren ist deshalb nicht erst nach erfolgter Zugabe aller Komponenten erforderlich, sondern bereits zu jedem Zeitpunkt während ihrer Zugabe, um währenddessen dauerhaft eine konstante Trombe (Vortex) aufgrund des Donut-Effektes während der Durchmischung zu gewährleisten.

Für Teilprozesse wie beispielsweise für die Zugabe von Pigmentpasten werden teilweise auch automatisierte Dosieranlagen zur Herstellung dieser Beschichtungsmittelzusammensetzungen eingesetzt. Unabhängig davon, ob die Dosierung manuell oder automatisiert mittels Dosieranlagen erfolgt, liegt der Herstellung üblicherweise eine gravimetrische Arbeitsweise zugrunde, d.h. die Dosierung der Komponenten erfolgt über Verwiegung, d.h. über die Gewichtsbestimmung innerhalb des zur Herstellung eingesetzten Mischbehälters. Problematisch ist hierbei jedoch, dass üblicherweise im Fall einer solchen gravimetrischen Dosierung zumindest nicht über die gesamte Dauer der Zugabe der einzelnen Komponenten eine Durchmischung mittels Rühren möglich ist. Insbesondere ist während der gravimetrischen Feindosierung einzelner Komponenten ein Rühren üblicherweise nicht möglich, da es sonst zu Fehldosierungen bei der Zugabe kommen kann, weil die Rührbewegung die Verwiegung bzw. das Waagesignal stört. Als Folge dessen muss das Rühren zumindest während der Dauer der finalen Phase der Dosierung gestoppt werden, was jedoch aufgrund des Auftretens von Viskositätsänderungen innerhalb der herzustellenden Zusammensetzung aus den vorstehend bereits genannten Gründen nachteilig ist und zwar insbesondere dann, wenn die Herstellung von zum Beispiel Wasserbasislacken in nur vergleichsweise kleinem Maßstab innerhalb von Forschungs- und Entwicklungslaboren erfolgt.

Zudem müssen bei der Herstellung solcher Zusammensetzungen, welche notwendigerweise unter Rühren erfolgen muss, unabhängig davon, ob die Dosierung automatisiert über Dosieranlagen oder manuell erfolgt, vorab alle relevanten Rührparameter während der Dauer der Dosierung für jede eingesetzte Komponente eines konkreten Rezeptes einer bestimmten Zielformulierung vorab erprobt und definiert werden, um auch während der Dosierung ein Rühren zu ermöglichen. Ein solcher relevanter Rührparameter ist die Angabe der vertikalen Position des eingesetzten Rührkörpers des Rührwerks in der Flüssigkeitssäule, die während der Dauer der Dosierung vom Füllstand innerhalb des Behälters abhängig ist, in den zwecks Herstellung der Zielformulierung dosiert wird. Nachteilig an dieser Vorgehensweise ist jedoch zum einen, dass ein solcher relevanter Rührparameter für jedes konkrete Rezept einer bestimmten Zielformulierung wie vorstehend erwähnt vorab bekannt und daher jeweils manuell experimentell bestimmt werden muss, was einen hohen Zeit- und Arbeitsaufwand erfordert. Die notwendige Vorbestimmung und Vorgabe absoluter Rührparameter hat zudem zur Folge, dass diese für jede Chargengröße oder Probenmenge jeweils neu ermittelt und vorgegeben werden muss. Beispielsweise müssen für eine anvisierte finale Probenmenge von 10 Litern oder alternativ einer Chargengröße von 1000 Litern vorab die erforderlichen Rührerhöhen während der einzelnen Dosierpositionen ermittelt werden. Diese Auftragsmengen unterliegen aufgrund unterschiedlichen Bedarfs der anvisierten Menge der Zielformulierung aber Schwankungen, zum Beispiel von 3, 5 oder 7 Litern im Labor oder 100 Litern oder 500 Litern in der Produktion. Das hat zur Folge, dass für jede mögliche Chargengröße oder Probenmenge die Verfahrensparameter, insbesondere die Rührparameter, ermittelt und bekannt sein und in der Auftragsvorbereitung nachträglich eingepflegt werden müssen. Auf kurzfristig erforderliche neue Auftragsmengen kann nicht reagiert werden, da dann der relevante Verfahrensparameter für das so geänderte Rezept nicht mehr korrekt ist und es deshalb zu Fehldosierungen kommen kann oder die Arbeitssicherheit für das Rühren nicht gewährleistet werden kann. Aus diesem Grunde ist auch bisher der Automatisierungsgrad in der Herstellung von Automobillacken noch auf einem sehr geringen Niveau und die manuelle Arbeitsweise überwiegt, da in der Produktion keine absoluten Angaben benötigt werden und auf nur allgemeine Herstellungshinweise oftmals mit Erfahrungswerten reagiert werden kann. Problematisch ist hierbei aber die Einschränkung des Automatisierungsanspruchs durch beispielsweise den Einsatz von Dosieranlagen und die Einschränkung in Bezug auf eine Standardisierung, da die realen Verfahrensparameter des Rührprozesses wie Rührerhöhe oder Drehzahl nicht protokolliert sind/werden, d.h. keine Soll-/Ist-Absolutwerte, Werte der Vorgaben oder deren Dokumentation.

Es besteht daher Bedarf an einem Verfahren zur Herstellung einer Beschichtungsmittelzusammensetzung oder einer Vorstufe davon, welches mittels einer gravimetrischen Dosierung der zu ihrer Herstellung benötigten Komponenten erfolgen kann, jedoch gleichzeitig zu jedem Zeitpunkt der Herstellung eine ununterbrochene Durchmischung auch während der Dosierung der einzelnen Komponenten erlaubt und eine ausreichende Flexibilität hinsichtlich von Änderungen innerhalb der Arbeitsvorbereitung, Produktion und Rezeptherstellung gewährleistet und die qualitativ notwendige Durchmischung und Einarbeitung unter Rühren sicherstellt, ohne dabei das Auftreten von Fehldosierungen zu riskieren.

WO 2013/098913 A1 offenbart ein Verfahren entsprechend dem Oberbegriff des Anspruchs 1.

## Aufgabe

Eine Aufgabe der vorliegenden Erfindung ist es daher, ein Verfahren zur Herstellung von Beschichtungsmittelzusammensetzungen oder Vorstufen davon zur Verfügung zu stellen, welches mittels einer gravimetrischen Dosierung der zu ihrer Herstellung benötigten Komponenten erfolgt und zu jedem Zeitpunkt der Herstellung eine ununterbrochene Durchmischung der einzelnen Komponenten auch während der Dosierung erlaubt, ohne dabei irgendwelche Nachteile herkömmlicher Verfahren aufzuweisen, und eine ausreichende Flexibilität hinsichtlich von Änderungen innerhalb der Arbeitsvorbereitung, Produktion und Rezeptherstellung gewährleistet und die qualitativ notwendige Durchmischung und Einarbeitung unter Rühren sicherstellt, ohne dabei das Auftreten von Fehldosierungen zu riskieren. Insbesondere ist es eine Aufgabe der vorliegenden Erfindung, ein solches Verfahren bereitzustellen, welches die Herstellung von Wasserbasislacken ermöglicht und zwar im Besonderen innerhalb von Forschungs- und Entwicklungslaboren. Zugleich soll das Verfahren auch unter Gesichtspunkten der Arbeitssicherheit die in der Industrie gestellten Anforderungen erfüllen.

## Lösung

Diese Aufgabe wird gelöst durch die in den Patentansprüchen beanspruchten Gegenstände sowie die in der nachfolgenden Beschreibung beschriebenen bevorzugten Ausführungsformen dieser Gegenstände.

Ein erster Gegenstand der vorliegenden Erfindung ist daher ein Verfahren zur Herstellung einer in der Automobilindustrie einsetzbaren Beschichtungsmittelzusammensetzung oder einer Vorstufe davon, wobei das Verfahren wenigstens den Schritt (1) umfasst, nämlich

(1) Einwiegen aller zur Herstellung der Beschichtungsmittelzusammensetzung oder der Vorstufe davon erforderlichen Komponenten unter Verwendung einer gravimetrischen Dosieranlage mittels wenigstens eines Dosierventils in einen für die Einwaage geeigneten Behälter,
dadurch gekennzeichnet, dass die in den Behälter eingewogenen Komponenten während der Dauer der Durchführung von Schritt (1) mittels wenigstens eines Rührkörpers durchmischt werden und während der Durchführung von Schritt (1) eine kontinuierliche Anpassung der Position des wenigstens einen Rührkörpers an den jeweiligen Füllstand innerhalb des Behälters erfolgt, wobei der jeweilige Füllstand durch die Menge und Anzahl der in den Behälter eingewogenen Komponenten vorgegeben wird und die Position des wenigstens einen Rührkörpers der Höhe des Rührkörpers innerhalb des Behälters, gerechnet vom Boden des Behälters, entspricht.

Die Durchführung von Schritt (1) erfolgt vorzugsweise automatisiert, insbesondere mittels Unterstützung einer Software.

Es wurde überraschend gefunden, dass das erfindungsgemäße Verfahren unter gravimetrischer Dosierung aller eingesetzten Komponenten erfolgen kann und anhand des ermittelten Füllstands zu jedem Zeitpunkt der Herstellung eine ununterbrochene Durchmischung der einzelnen Komponenten während der Dosierung und/oder in etwaigen Dosierpausen gewährleistet werden kann. Die kontinuierliche Anpassung der Höhe des Rührkörpers innerhalb des Behälters, gerechnet vom Boden des Behälters, ist insbesondere durch eine automatisierte und vom Füllstand abhängige Bewegung des Rührkörpers innerhalb des Behälters möglich. Durch kann eine manuelle Regelung der Höhe des Rührkörpers durch den Hersteller wie einen Labormitarbeiter entfallen.

Es wurde ferner überraschend gefunden, dass mittels des erfindungsgemäßen Verfahrens auf die potentiell auftretenden Viskositätsänderungen bei der Dosierung durch die kontinuierliche Anpassung der Höhe des Rührkörpers innerhalb des Behälters reagiert werden kann, insbesondere wenn sowohl hydrophile als auch hydrophobe Komponenten eingesetzt werden wie beispielsweise bei der Herstellung von Wasserbasislacken.

Gleichzeitig ermöglicht das erfindungsgemäße Verfahren überraschend die Aufrechthaltung einer konstanten Trombe (Vortex) innerhalb des zur Herstellung eingesetzten Behälters, die für eine optimale Durchmischung aller Komponenten erforderlich ist. Dies wird insbesondere dadurch ermöglicht, dass während der Durchführung von Schritt (1) eine kontinuierliche Anpassung der Position des Rührkörpers an den jeweiligen Füllstand innerhalb des Behälters erfolgt, der durch die Menge und Anzahl der in den Behälter eingewogenen Komponenten vorgegeben wird und insbesondere basierend auf dem Waagesignal ermittelt werden kann. Weitere überraschende Vorteile dieser Verfahrensführung ergeben sich aufgrund kürzerer Zeitdauern, die für die Herstellung nunmehr möglich sind, da vor der Dosierung eine experimentelle Ermittlung und Definition der Position des eingesetzten Rührkörpers des Rührers während der Durchmischung nicht erforderlich ist. Neben den bereits vorstehend genannten qualitativen Vorteilen beim Herstellungsverfahren bzw. der hergestellten Zusammensetzung oder Vorstufe davon, ergibt sich hieraus zudem ein wirtschaftlicher Vorteil aufgrund der ökonomischeren Verfahrensführung.

Ferner ergeben sich zudem überraschenderweise Vorteile hinsichtlich einer Erhöhung der Arbeitssicherheit bei dem Herstellungsverfahren, da mittels des erfindungsgemäßen Verfahrens und insbesondere der kontinuierlichen Anpassung der Position des Rührkörpers an den jeweiligen Füllstand innerhalb des Behälters ein sogenannter Durchtrittsbetrieb vermieden werden kann. Darunter versteht man bei einem Herstellverfahren mittels Durchmischen aller Komponenten in einem Behälter einen Zustand, bei welchem der Rührkörper vom zu rührenden Medium nicht vollständig benetzt ist und sich daher zumindest teilweise oberhalb des Füllstands des Behälters befindet. Hierdurch kann es speziell unter dem Gesichtspunkt des Betriebes in Ex-Zonen zu unterschiedlichen Gefährdungspotenzialen kommen. Exemplarisch zu nennen sind hierbei ein möglicher Bruch der Rührwelle durch Anregung von unzulässigen Schwingungen (mechanische Zündquelle), die nicht mehr gegebene elektrische Ableitung, unkontrolliertes Verspritzen gegebenenfalls unter ungewollter Benetzung von Zündquellen, ungewollte Zerstäubung brennbarer Flüssigkeiten und damit einhergehend, die verstärkte Ausbildung weiterer Ex-Zonenbereiche und der Möglichkeit der Bildung von Zündquellen. Da innerhalb der Durchführung von Schritt (1) des erfindungsgemäßen Verfahrens eine kontinuierliche Anpassung der Position des Rührkörpers an den jeweiligen Füllstand innerhalb des Behälters erfolgt, kann dies mittels des erfindungsgemäßen Verfahrens verhindert werden.

## Ausführliche Beschreibung

*Erfindungsgemäßes Verfahren*

Das erfindungsgemäße Verfahren ist ein Verfahren zur Herstellung einer in der Automobilindustrie einsetzbaren Beschichtungsmittelzusammensetzung oder einer Vorstufe davon. Dabei sind sowohl Beschichtungsmittelzusammensetzungen herstellbar, die im Rahmen einer OEM-Serienlackierung als auch im Rahmen einer Reparaturlackierung eingesetzt werden können. Gleiches gilt für entsprechende Vorstufen.

Vorzugsweise wird das erfindungsgemäße Verfahren bei der Entwicklung von in der Automobilindustrie einsetzbaren Beschichtungsmittelzusammensetzungen oder Vorstufen davon eingesetzt, vorzugsweise innerhalb von Laboren wie Forschungs- und Entwicklungslaboren. Gleichermaßen ist jedoch auch der Einsatz des erfindungsgemäßen Verfahrens innerhalb einer großtechnischen Produktion möglich.

In der Automobilindustrie einsetzbare Beschichtungsmittelzusammensetzungen sind beispielsweise Elektrotauchlacke, Primer, Füller, Basislacke, insbesondere Wasserbasislacke, Decklacke einschließlich von Klarlacken, insbesondere lösemittelbasierten Klarlacken. Die Herstellung von Wasserbasislacken ist besonders bevorzugt.

Der Begriff des Basislacks ist dem Fachmann bekannt und beispielsweise definiert im Römpp Lexikon, Lacke und Druckfarben, Georg Thieme Verlag, 1998, 10. Auflage, Seite 57. Unter einem Basislack ist demzufolge insbesondere ein in der Automobillackierung und allgemeinen Industrielackierung eingesetzter farbgebender und/oder farbgebender und einen optischen Effekt gebender Zwischenbeschichtungsstoff zu verstehen. Dieser wird im Allgemeinen auf einem mit Füller oder Primer vorbehandelten Metall- oder Kunststoffuntergrund, mitunter auch direkt auf dem Kunststoffuntergrund aufgebracht. Auch Altlackierungen, welche gegebenenfalls noch vorbehandelt werden müssen (beispielsweise durch Anschleifen), können als Untergründe dienen. Mittlerweile ist es durchaus üblich, mehr als eine Basislackschicht aufzutragen. Dementsprechend stellt in einem solchen Fall eine erste Basislackschicht den Untergrund für eine zweite dar. Um eine Basislackschicht insbesondere gegen Umwelteinflüsse zu schützen, wird auf dieser mindestens noch eine zusätzliche Klarlackschicht appliziert. Ein Wasserbasislack ist ein wässriger Basislack, in dem der Anteil an Wasser > als der Anteil an organischen Lösemitteln ist, bezogen auf das Gesamtgewicht an Wasser und organischen Lösemitteln in Gew.-% innerhalb des Wasserbasislacks.

Eine Vorstufe einer in der Automobilindustrie einsetzbaren Beschichtungsmittelzusammensetzung ist vorzugsweise eine Pigment- und/oder Füllstoffpaste. Der Begriff der Pigmentpaste beinhaltet dabei Farbpigmentpasten und Effektpigmentpasten. Vorstufen umfassen zudem (temporäre) Halbfabrikate, die zur Herstellung solcher Beschichtungsmittelzusammensetzungen eingesetzt werden können, insbesondere von Basislacken wie Wasserbasislacken, wie beispielsweise Bindemittel- und/oder Additiv-Mischungen. Der Begriff der Pigmentpaste ist dem Fachmann bekannt und beispielsweise definiert im Römpp Lexikon, Lacke und Druckfarben, Georg Thieme Verlag, 1998, 10. Auflage, Seite 452: Pigmentpasten sind Zubereitungen von Pigmentmischungen in Trägermaterialien wie Polymerisaten, in denen die Pigmente in einer höheren Konzentration vorliegen als es der späteren Anwendung entspricht. Die spätere Anwendung von Pigmentpasten liegt in der Regel in der Herstellung von Beschichtungsmittelzusammensetzungen wie Basislacken. Eine Pigmentpaste ist somit von einer Beschichtungsmittelzusammensetzung wie einem Basislack dahingehend zu unterscheiden, dass sie lediglich eine Vorstufe zur Herstellung einer solchen Beschichtungsmittelzusammensetzung darstellt. Eine Pigmentpaste als solche kann daher selbst nicht als Basislack eingesetzt werden. In Pigmentpasten ist üblicherweise das relative Gewichtsverhältnis von Pigmenten zu Polymerisaten größer als in den Beschichtungsmitteln, zu deren Herstellung die Paste schließlich eingesetzt wird. Neben den Trägermaterialien wie Polymerisaten, die auch Pastenbindemittel genannt werden, und Pigmenten sind in der Pigmentpaste üblicherweise auch Wasser und/oder organische Lösemittel vorhanden. Auch unterschiedliche Additive wie Netzmittel und/oder Verdicker können in einer Pigmentpaste eingesetzt werden. Eine Effektpigmentpaste stellt eine Pigmentpaste dar, die wenigstens ein Effektpigment als Pigment enthält. Ein Fachmann ist mit dem Begriff der Effektpigmente vertraut. Eine entsprechende Definition findet sich beispielsweise im Römpp Lexikon, Lacke und Druckfarben, Georg Thieme Verlag, 1998, 10. Auflage, Seiten 176 und 471. Eine Definition von Pigmentgen im Allgemeinen und weitere Spezifizierungen davon sind in der DIN 55943 (Datum: Oktober 2001) geregelt. Vorzugsweise handelt es sich bei Effektpigmenten um solche Pigmente, die optisch effektgebend oder farb- und optisch effektgebend, insbesondere optisch effektgebend, sind. Die Begriffe "optisch effektgebendes und farbgebendes Pigment", "optisch effektgebendes Pigment" und "Effektpigment" sind daher vorzugsweise austauschbar.

Das erfindungsgemäße Verfahren ist ein Verfahren zur Herstellung einer in der Automobilindustrie einsetzbaren Beschichtungsmittelzusammensetzung oder einer Vorstufe davon. Es umfasst wenigstens den Schritt (1), kann jedoch noch weitere optionale Schritte enthalten.

*Schritt (1) des erfindungsgemäßen Verfahrens*

Schritt (1) sieht ein Einwiegen aller zur Herstellung der Beschichtungsmittelzusammensetzung oder der Vorstufe davon erforderlichen Komponenten unter Verwendung einer gravimetrischen Dosieranlage mittels wenigstens einen Dosierventils in einen für die Einwaage geeigneten Behälter vor, wobei die in den Behälter eingewogenen Komponenten vorzugsweise zu jedem Zeitpunkt während der Dauer der Durchführung von Schritt (1) mittels wenigstens eines Rührkörpers durchmischt werden und während der Durchführung von Schritt (1) eine kontinuierliche Anpassung der Position des wenigstens einen Rührkörpers an den jeweiligen Füllstand innerhalb des Behälters erfolgt, wobei der jeweilige Füllstand durch die Menge und Anzahl der in den Behälter eingewogenen Komponenten vorgegeben wird und die Position des wenigstens einen Rührkörpers der Höhe des Rührkörpers innerhalb des Behälters, gerechnet vom Boden des Behälters, entspricht.

Als entsprechende Komponenten werden vorzugsweise Lösungen oder Dispersionen eingesetzt.

Die Einwaage gemäß Schritt (1) des erfindungsgemäßen Verfahrens stellt eine Dosierung dar. Diese wird gemäß Schritt (1) unter Verwendung einer gravimetrischen Dosieranlage durchgeführt. Vorzugsweise erfolgt das gesamte erfindungsgemäße Verfahren mittels einer gravimetrischen Dosieranlage.

Die kontinuierliche Anpassung der Position des wenigstens einen Rührkörpers an den jeweiligen Füllstand innerhalb des Behälters erfolgt vorzugsweise so, dass der wenigstens eine Rührkörper zu jedem Zeitpunkt unterhalb des jeweiligen Füllstandes positioniert ist und sich vorzugsweise mit seinem gesamten Umfang unterhalb des jeweiligen Füllstands befindet.

Die Position des Rührkörpers entspricht der Höhe des Rührkörpers innerhalb des Behälters, gerechnet vom Boden des Behälters. Die optimale Position des Rührkörpers innerhalb des Behälters ist vom Füllstand abhängig und wird daher mittels des erfindungsgemäßen Verfahrens kontinuierlich an diesen angepasst. Je höher z.B. der Füllstand ist, desto höher ist die Position des Rührkörpers innerhalb des Behälters, gerechnet vom Boden des Behälters. Je geringer z.B. der Füllstand ist, desto tiefer ist die Position des Rührkörpers innerhalb des Behälters, gerechnet vom Boden des Behälters. Die Position des Rührkörpers entspricht der Höhe $R_h$ des Rührkörpers innerhalb des Behälters, gerechnet vom Boden des Behälters, dar. Der Boden des Behälters hat in diesem Fall die Höhe h = 0 mm.

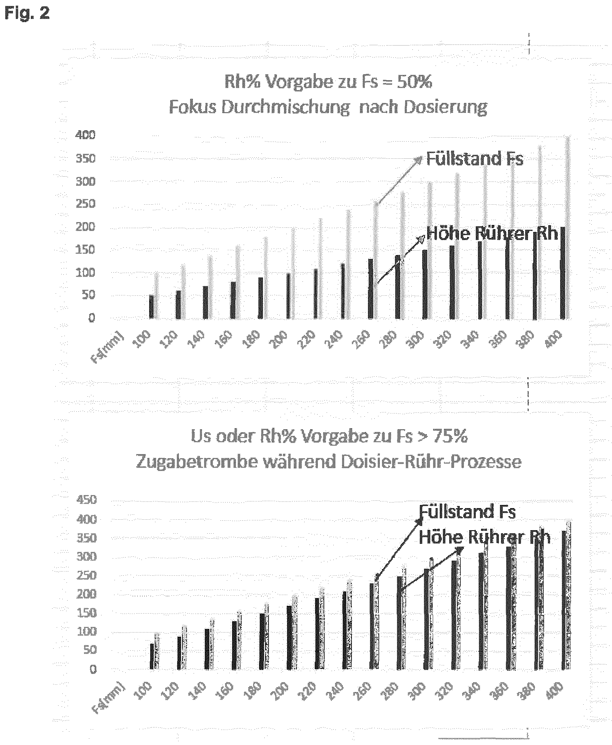

Vorzugsweise ist der Rührkörper über die gesamte Dauer der Durchführung von Schritt (1) so positioniert, dass er sich beispielsweise wenigstens zu X = 50% für eine gute Durchmischung (**Fig. 2**), besonders bevorzugt wenigstens zu X = 75 für eine Kombination aus guter Durchmischung und guter Zugabetrombe (**Fig. 2**), ganz besonders bevorzugt wenigstens zu X = 95% gezielt für eine optimale Zugabetrombe (**Fig. 2**), des Umfangs seiner Gesamtfläche (Rührkörper) unterhalb des jeweiligen Füllstands befindet.

Zwischen dem Füllstand $F_s$ innerhalb des Behälters, gemessen in [mm] vom Boden des Behälters, und der

Höhe $R_h$ des Rührköpers innerhalb des Behälters, gemessen vom Boden des Behälters in [mm], besteht folgender Zusammenhang:

$$R_h = F_s \cdot X$$

X bezeichnet dabei wie vorstehend angegeben eine Prozentangabe, die angibt, zu welchem prozentualen Anteil sich der Rührkörper unterhalb des Füllstands $F_s$ befindet.

Um eine Durchmischung mittels des Rührkörpers zu ermöglichen, muss dieser einen bestimmten Mindestabstand zum Boden des Behälters aufweisen, um ein Rühren zu ermöglichen. $R_{h,min}$ bezeichnet dabei den tiefstmöglichen Abstand des Rührkörpers während der Durchmischung zum Behälterboden.

Bei Kenntnis des Füllstands $F_s$ innerhalb des Behälters und der Höhe $R_h$ des Rührköpers innerhalb des Behälters, gemessen vom Boden des Behälters in [mm], kann der sogenannte Unterspiegel $U_s$ gemäß folgener Gleichung berechnet werden:

$$U_s = F_s - R_h$$

Der Unterspiegel $U_s$ stellt dabei den Abstand des Füllstands $F_s$ von der Höhe $R_h$ des Rührkörpers dar.

Unter Berücksichtigung von $R_h = F_s \cdot X$ kann der Unterspiegel $U_s$ somit gemäß folgender Gleichung bestimmt werden:

$$U_s = F_s - R_h = F_s - (F_s \cdot X)$$

X, also der prozentuale Anteil, innerhalb dessen sich der Rührkörper unterhalb des Füllstands $F_s$ befindet, kann dann zu

$$X = 1 - U_s/F_s$$

berechnet werden.

Mittels bestimmter relativer Vorgaben für den Wert X gemäß der Formel $X = 1 - U_s/F_s$ oder für den Unterspiegel $U_s$ kann so die Höhe $R_h$ des Rührköpers innerhalb des Behälters während der Durchführung von Schritt (1) gesteuert werden. Beispielsweise ist es möglich, zunächst bei Beginn einer Dosierung einen Unterspiegel $U_s = 0$ mm zu wählen und im Zuge einer automatisierten Durchführung des Schrittes (1) erst ab Erreichen eines Unterspiegels von $U_s \neq 0$ wie beispielsweise $U_s = 30$ mm eine Anpassung von $R_h$ an den Füllstand $F_s$ vorzunehmen.

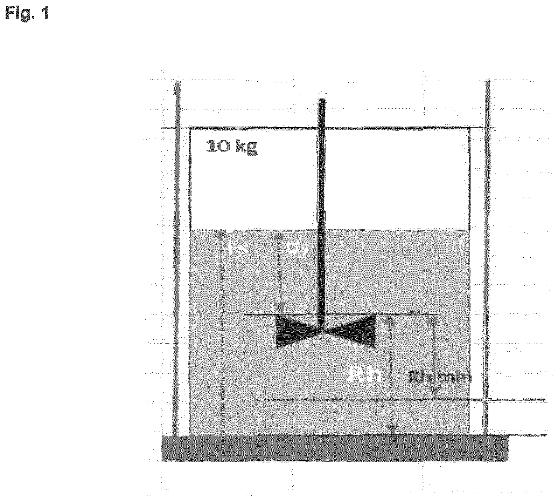

Die vorgenannten Zusammenhänge sind in **Fig. 1** veranschaulicht.

Aus der unteren Abbildung innerhalb von **Fig. 2** ist beispielhaft ersichtlich, dass sich die Höhe des Rührkörpers ($R_h$) für eine optimale Dosier-Rührtrombe (Zugabetrombe) (in **Fig. 2** jeweils der kürzere Balken links) möglichst nah am Flüssigkeitsspiegel $F_s$ (in **Fig. 2** jeweils der längere Balken rechts) befinden sollte, aber aus Gründen der Arbeitssicherheit (Durchtrittsbetrieb) immer eine bestimmte Überdenkung (Unterspiegelwert $U_s$) vorweisen muss ($U_s = F_s - R_h$). Dem gegenüber steht eine optimale Position im Bereich von ca. 50% vom Flüssigkeitsspiegel $F_s$, um eine optimale Durchmischung zu gewährleisten, was aus der oberen Abbildung innerhalb von **Fig. 2** beispielhaft ersichtlich ist.

Insbesondere ist der Rührkörper über die gesamte Dauer der Durchführung von Schritt (1) vollständig unterhalb des Füllstands positioniert (Plausibilitätsprüfung: X muss immer <100% sein). Dadurch kann ein Durchtrittsbetrieb verhindert werden. Vorzugsweise wird dies innerhalb von Schritt (1) kontrolliert, insbesondere wenn die Durchführung des Schrittes (1) automatisiert wie zum Beispiel mittels Unterstützung einer Software erfolgt, so dass die Durchführung von Schritt (1) erst beginnen kann oder fortgeführt werden kann, wenn der Rührkörper sich unterhalb des aktuellen Füllstands befindet.

Die durch den Rührkörper erzielte Durchmischung gemäß Schritt (1) des erfindungsgemäßen Verfahrens erfolgt bei einer bestimmten Drehzahl des Rührwerks, welches den Rührkörper beinhaltet. Die Drehzahl kann über die Gleichung $v = \pi \cdot d \cdot n$ in die Umfangsgeschwindigkeit v umgerechnet werden, wobei d dem Durchmesser des Rührkörpers, gemessen in [mm], und n der Drehzahl, gemessen in [Upm] (Umdrehungen pro Minute) des Rührwerks entsprechen.

Vorzugsweise wird Schritt (1) des erfindungsgemäßen Verfahrens bei konstanter Drehzahl und/oder Umfangsgeschwindigkeit durchgeführt.

Es ist möglich, während der Durchführung von Schritt (1) des erfindungsgemäßen Verfahrens zusätzlich zur kontinuierliche Anpassung der Position des wenigstens einen Rührkörpers an den jeweiligen Füllstand innerhalb des Behälters eine kontinuierliche Anpassung der Drehzahl und/oder der Umfangsgeschwindigkeit des Rührwerks in Abhängigkeit von der durch die Durchmischung entstehenden Trombe innerhalb des Behälters durchzuführen, wobei die Trombe vorzugsweise optisch mittels einer Kamera erfasst wird. Der Begriff der Trombe (auch genannt Vortex) ist dem Fachmann auf dem Gebiet der Rühr- und Mischtechnik bekannt. Darunter versteht man das durch ein Rührwerk erzeugte Strömungsbild an der Oberflläche der durchmischten Mischung wie an einer entsprechenden Flüssigkeitsoberfläche. Die Trombe ist abhängig vom jeweiligen Füllstand und der jeweiligen Viskosität der Mischung innerhalb des Behälters. Um eine gute Durchmischung während der gesamten Dauer der Dosierung zu gewährleisten, ist auch bei sich änderndem Füllstand und/oder sich ändernder Viskosität die Aufrechterhaltung einer konstanten Trombe erforderlich bzw. wünschenswert. Die kontinuierliche Anpassung der Drehzahl und/oder der Umfangsgeschwindigkeit des Rührwerks kann in Abhängigkeit von der durch die Durchmischung entstehenden Trombe innerhalb des Behälters durch optische Erfassung der Trombe mittels einer Kamera und vorzugsweise digitaler Auswertung der so erhaltenen optischen Daten erfolgen. Die digitale Auswertung beinhaltet dabei vorzugsweise einen Vergleich der erhaltenen optischen Daten der Trombe mit in einer Datenbank enthaltenen optischen Vergleichsdaten. Dabei erfolgt vorzugsweise ein Vergleich der aufgenommenen Bilder der Rührtrombe mit in der Datenbank enthaltenen Vergleichsbildern von Rührtromben, die vorzugsweise in Bezug auf den jeweiligen Füllstand des Behälters eine optimale Trombe darstellen. Durch den erfolgten Vergleich kann dann die während der Durchführung von Schritt (1) des erfindungsgemäßen Verfahrens innerhalb des Behälters existierende Trombe hinsichtlich der Durchmischung der im Behälter vorliegenden Komponenten optimiert werden, was durch die kontinuierliche Anpassung der Drehzahl und/oder der Umfangsgeschwindigkeit des Rührwerks in Abhängigkeit von dem optischen Bild der Trombe innerhalb des Behälters erfolgt. Die in der Datenbank enthaltenen Vergleichsbilder von Tromben, die vorzugsweise in Bezug auf die jeweligen Bedingungen innerhalb des Behältes wie insbesondere Füllstand und/oder Viskosität eine optimale Trombe darstellen, sind daher vorzugsweise innerhalb der Datenbank mit Informationen hinsichtlich der für eine optimale Durchmischung erforderlichen Drehzahlen und/oder Umfangsgeschwindigkeit des eingesetzten Rührwerks verknüpft. Darauf basierend kann dann ein Abgleich erfolgen und so die Drehzahl und/oder die Umfangsgeschwindigkeit des Rührwerks kontinuierlich angepasst werden.

Eine zusätzliche kontinuierliche Anpassung der Drehzahl und/oder der Umfangsgeschwindigkeit des Rührwerks in Abhängigkeit von der durch die Durchmischung entstehenden Trombe innerhalb des Behälters ist jedoch nicht zwingend erforderlich, da eine kontinuierliche Anpassung der Position des wenigstens einen Rührkörpers an den jeweiligen Füllstand innerhalb des Behälters für die Durchführung von Schritt (1) des erfindungsgemäßen Verfahrens bereits ausreichend ist, insbesondere wenn das erfindungsgemäße Verfahren innerhalb von Laboren wie Forschungs- und Entwicklungslaboren eingesetzt wird.

Vorzugsweise wird als erste Komponente eine Komponente eingesetzt, die später in höherer Menge als die anderen einzusetzenden Komponenten in der Zielformulierung vorliegt. Auf diese Weise kann gewährleistet werden, dass der Rührkörper über die gesamte Dauer der Durchführung von Schritt (1) vollständig unterhalb des Füllstands positioniert ist, da der Rührkörper in diesem Fall vorzugsweise noch vor Zugabe der zweiten Komponente bereits vollständig von der ersten bereits im Behälter befindlichen Komponente bedeckt, d.h. vollständig benetzt, ist.

Die in den Behälter eingewogenen Komponenten werden zu jedem Zeitpunkt während der Dauer der Durchführung von Schritt (1) mittels eines Rührkörpers durchmischt. Vorzugsweise ist der Rührkörper Teil eines Rührwerks, welches vorzugsweise durch einen Motor wie einen elektrischen Motor ansteuerbar, bedienbar und betreibbar ist. Jede Art von Rührkörpern können eingesetzt werden. Vorzugsweise sind die Rührkörper ausgewählt aus der Gruppe bestehend aus Propellern, Schrägblättern, Scheiben, Taumelscheiben, Hollowblades, Impellern, Kreuzbalken, Ankern, Blättern, Gittern und Zahnscheiben sowie Lenartscheiben. Der oder die Rührkörper können dabei an eine Rührwelle angebracht sein. Das Rührwerk ist vorzugsweise zu einer Höchstdrehzahl bis 1500 min$^{-1}$ befähigt. Das Rührwerk ist vorzugsweise höhenverstellbar, insbesondere ist die Rührwelle als Teil des Rührwerks höhenverstellbar, um eine kontinuierliche Anpassung der Position des Rührkörpers an den jeweiligen Füllstand innerhalb des Behälters zu gewährleisten.

Vorzugsweise wird das Gewicht des eingesetzten Behälters und darin bereits eingewogener Komponenten zu jedem Zeitpunkt der Durchführung von Schritt (1) bestimmt. Das Gewicht des eingesetzten vorzugsweise leeren Behälters vor der Durchführung von Schritt (1) ist vorzugsweise bekannt. Das Gewicht des eingesetzten Behälters und darin bereits eingewogener Komponenten, d.h. im Falle eines vor Durchführung von Schritt (1) leeren Behälters die Summe aus Leergewicht des Behälters und aus darin bereits eingewogenen Komponenten, wird vorzugsweise zu jedem Zeitpunkt der Durchführung von Schritt (1) bestimmt.

Vorzugsweise weist der eingesetzte Behälter vor Durchführung von Schritt (1) ein ermitteltes und daher bekanntes Leergewicht auf. Das Gewicht des Behälters kann dabei mittels einer Waage wie einer elektrischen Waage noch vor Durchführung des Schrittes (1) ermittelt oder noch vor Beginn der Einwaage gemäß Schritt (1) mittels der eingesetzten gravimetrischen Dosieranlage bestimmt werden. Ist der Behälter vor Durchführung des Schrittes (1) leer, was vorzugsweise der Fall ist, so entspricht das so ermittelte bzw. bestimmte Gewicht dem Leergewicht des Behälters.

Das Volumen des Innenraums des erfindungsgemäß eingesetzten Behälters ist vorzugsweise ebenfalls bekannt. In diesem Fall stellt das Volumen des Innenraums des Behälters ein vordefiniertes Volumen dar, welches auf Grundlage der Geometrie des Innenraums des Behälters (z.B. Breite, Höhe, Länge, Radius und/oder Durchmesser) berechenbar und daher bekannt ist.

Vorzugsweise weist der erfindungsgemäß eingesetzte Behälter auf seiner Außenseite ein elektronisch lesbares Etikett wie einen Barcode auf, der gescannt werden kann. Das Etikett enthält vorzugsweise wenigstens die Information des Leergewichts des Behälters und/oder Informationen zur Geometrie des Innenraums des eingesetzten Behälters und/oder des Volumens des Innenraums. In diesem Fall kann das erfindungsgemäße Verfahren einen weiteren optionalen Schritt (0) umfassen, der ein elektronisches Lesen des Etiketts des Behälters beinhaltet. Die Durchführung von Schritt (1) des erfindungsgemäßen Verfahrens kann dann auf Grundlage dieser elektronisch gelesenen Information(en) erfolgen, insbesondere wenn die Durchführung des Schrittes (1) mittels Unterstützung einer Software erfolgt, insbesondere die kontinuierliche Anpassung der Position des Rührkörpers an den jeweiligen Füllstand innerhalb des Behälters.

Vorzugsweise erfolgt die kontinuierliche Anpassung der Position des Rührkörpers an den jeweiligen Füllstand innerhalb des Behälters dadurch, dass das jeweilige Gewicht von bereits in den Behälter eingewogenen Komponenten zu jedem Zeitpunkt der Durchführung von Schritt (1) bestimmt wird und in Kenntnis der Geometrie des Innenraums des eingesetzten Behälters in den Füllstand innerhalb des Behälters zu jedem Zeitpunkt umgerechnet wird.

Besonders bevorzugt erfolgt die kontinuierliche Anpassung der Position des Rührkörpers an den jeweiligen Füllstand innerhalb des Behälters dadurch, dass

(i) das jeweilige Gewicht des eingesetzten Behälters und darin bereits eingewogener Komponenten zu jedem Zeitpunkt der Durchführung von Schritt (1) bestimmt wird,

(ii) dieses Gewicht abzüglich des bekannten Leergewichts des Behälters in ein Volumen der in dem Behälter befindlichen Komponenten umgerechnet wird und

(iii) dieses Volumen in Kenntnis der Geometrie des Innenraums des eingesetzten Behälters wiederum in den Füllstand innerhalb des Behälters zu jedem Zeitpunkt umgerechnet wird.

Die Bestimmung des Gewichts des eingesetzten Behälters und darin bereits eingewogener Komponenten gemäß Stufe (i) kann wie vorstehend ausgeführt ermittelt bzw. bestimmt werden. Die Umrechnung des gemäß Stufe (i) bestimmten Gewichts wird innerhalb von Stufe (ii) in Kenntnis und abzüglich des Leergewichts des Behälters in ein Volumen der in dem Behälter befindlichen Komponenten umgerechnet. Dies erfolgt entweder in genauer Kenntnis der Dichte der in dem Behälter befindlichen Komponenten oder bei Annahme einer konstanten Dichte von beispielsweise $\rho$ = 1 g/cm$^3$. Innerhalb von Stufe (iii) erfolgt dann wiederum eine Umrechnung des in Stufe (ii) ermittelten Volumens in den Füllstand innerhalb des Behälters. Diese Umrechnung erfolgt in Kenntnis der Geometrie des Innenraums des eingesetzten Behälters (z.B. Breite, Höhe, Länge, Durchmesser, Radius, Volumen etc.).

Die Position des Rührkörpers innerhalb des Behälters, also die Höhe des Rührkörpers innerhalb des Behälters, gerechnet vom Boden des Behälters, kann so über eine kontinuierliche Bestimmung des Gewichts der bereits in den Behälter eingewogenen Komponenten vorzugsweise zu jedem Zeitpunkt der Durchführung von Schritt (1) erfolgen und eine Umrechnung dieses Gewichts in den jeweils zu jedem Zeitpunkt der Durchführung von Schritt (1) aktuell vorliegenden Füllstand, kontinuierlich an den Füllstand angepasst werden.

Vorzugsweise erfolgt die Durchführung des Schrittes (1) mittels Unterstützung einer Software, insbesondere die kontinuierliche Anpassung der Position des Rührkörpers an den jeweiligen Füllstand innerhalb des Behälters.

Vorzugsweise erfolgt die Durchführung von Schritt (1) automatisch bzw. automatisiert. Insbesondere erfolgt die kontinuierliche Anpassung der Position des wenigstens einen Rührkörpers an den jeweiligen Füllstand innerhalb des Behälters automatisiert. Vorzugsweise wird dies mittels Unterstützung durch eine Software erreicht.

Vorzugsweise erfolgt die Einwaage gemäß Schritt (1) auf Grundlage eines elektronisch innerhalb einer Datenbank erstellten oder aus einer bestehenden Datenbank, vorzugsweise Online-Dartenbank, abgerufenen Rezeptes einer Zielformulierung, welche der herzustellenden Beschichtungsmittelzusammensetzung oder der Vorstufe davon entspricht. Das Rezept der Zielformulierung umfasst insbesondere die Art, Anzahl und Menge der Komponenten, die zur Herstellung der Zielformulierung erforderlich sind, sowie die Reihenfolge ihrer Zugabe.

Das Rezept der Zielformulierung kann weitere Informationen bezüglich der Herstellung der Zielformulierung enthalten, zum Beispiel allgemeingültige und produktionsgerechte und praxisgerechte Kennzahlen.

Vorzugsweise enthält das elektronisch lesbare Etikett wie der Barcode, der auf die Außenseite des Behälters aufgebracht werden und gescannt werden kann, zudem das Rezept der Zielformulierung.

**Beispiele und Vergleichsbeispiele**

Die nachfolgenden Beispiele dienen der Erläuterung der Erfindung, sind jedoch nicht einschränkend auszulegen. Insbesondere wird erläutert, wie eine kontinuierliche Anpassung der Position des Rührkörpers an den jeweiligen Füllstand innerhalb des Behälters erfolgen kann.

*Beispiel B1*

Das Volumen des Innenraums des in diesem Beispiel eingesetzten Leerbehälters vor der Durchführung von Schritt (1) des erfindungsgemäßen Verfahrens beträgt V = $\pi \cdot r^2 \cdot h$, wobei r = 70 mm und h = 180 mm = 2770885 mm3, also ca. 2,771 l.

Der Füllstand $h_f$ wird dabei zu jedem Zeitpunkt der Zugabe berechnet. Die Berechnung erfolgt aus der Kenntnis des Volumens des Innenraums der im Behälter vorliegenden Komponenten bei Annahme einer Dichte $\rho$ von $\rho$ = 1 g/cm$^3$ (= 0,001 g/mm$^3$) über V = p/m.

In diesem Beispiel werden insgesamt während der Zeitdauer der Durchführung von Schritt (1) des erfindungsgemäßen Verfahrens 2800 g an Komponenten in den Behälter eingewogen. Das Volumen an 300 g eingewogener Komponenten beträgt bei einer Dichte $\rho$ von $\rho$ = 1 g/cm$^3$ V = 300 cm$^3$ (300 000 mm$^3$). Das Volumen an 400 g eingewogener Komponenten beträgt bei einer Dichte $\rho$ von $\rho$ = 1 g/cm$^3$ V = 400 cm$^3$ (400 000 mm$^3$). Analog kann das Volumen so zu jedem Zeitpunkt ermittelt werden. In nachstehender Tabelle werden exemplarisch die sich ergebenden Volumenangaben alle 100 g dargestellt (mittlere Spalte). Der Füllstand $h_f$ ergibt sich dann im vorliegenden Fall aus $h_f$ = V/ $\pi \cdot r^2$, wobei für V das jeweils ermittelte Volumen eingesetzt wird und r wie vorstehend erwähnt 70 mm beträgt. Im Fall von 300 g eingewogener Komponenten ergibt sich bei einem Volumen von 300 000 mm$^3$ so ein Füllstand $h_f$ von 19,5 mm. Im Fall von 400 g eingewogener Komponenten ergibt sich bei einem Volumen von 400 000 mm$^3$ so ein Füllstand $h_f$ von 26,0 mm. Analog kann der Füllstand zu jedem Zeitpunkt ermittelt werden. In nachstehender Tabelle werden exemplarisch die sich jeweils ergebenden Füllstände alle 100 g dargestellt (rechte Spalte).

## Tabelle: Bestimmung des Füllstands gemäß Waagenmesswert in g

| Annahme | Dichte= | 1,00 | g/ml |
|---|---|---|---|
| Kontrollrech. | 2770885 | mm³ | µLtr |
| /1000= | 2770,88 | cm³ | ml |
| /1000= | 2,77 | Ltr | dm³ |
| | | | |
| | Formel: | V = PI * r² * h | |
| | Gesamt-V | r [mm] | h |
| | 2770885 | mm³ | 180 |
| in g | | | |
| 300 | 300000 | mm³ | 19,5 |
| 400 | 400000 | | 26,0 |
| 500 | 500000 | | 32,5 |
| 600 | 600000 | | 39,0 |
| 700 | 700000 | | 45,5 |
| 800 | 800000 | | 52,0 |
| 900 | 900000 | | 58,5 |
| 1000 | 1000000 | | 65,0 |
| 1100 | 1100000 | | 71,5 |
| 1200 | 1200000 | | 78,0 |
| 1300 | 1300000 | | 84,4 |
| 1400 | 1400000 | | 90,9 |
| 1500 | 1500000 | | 97,4 |
| 1600 | 1600000 | | 103,9 |
| 1700 | 1700000 | | 110,4 |
| 1800 | 1800000 | | 116,9 |
| 1900 | 1900000 | | 123,4 |
| 2000 | 2000000 | | 129,9 |
| 2100 | 2100000 | | 136,4 |
| 2200 | 2200000 | | 142,9 |
| 2300 | 2300000 | | 149,4 |
| 2400 | 2400000 | | 155,9 |
| 2500 | 2500000 | | 162,4 |
| 2600 | 2600000 | | 168,9 |
| 2700 | 2700000 | | 175,4 |

Im vorliegenden Beispiel beträgt somit der geringste dargestellte Füllstand 19,5 mm (bei 300 g Zugabe an Komponenten) und der höchste dargestellte Füllstand 175,4 mm (bei 2700 g Zugabe an Komponenten). Die Position des Rührkörpers liegt jeweils unterhalb des ermittelten Füllstands zu jeder Zeit der Zugabe.

*Beispiel B2*

Im Beispiel B2 wird eine Verdickerlösung gemäß Schritt (1) des erfindungsgemäßen Verfahrens in einen Leerbehälter dosiert. Die Dosierung wird dabei nach jeder Zuhabe von 100 g in einem Bereich von 100 g bis 2800 g untersucht. Die Dichte beträgt 1,15 g/ml.

Der tiefstmögliche Abstand $R_{h,min}$ des Rührkörpers während der Durchmischung zum Behälterboden beträgt dabei $R_{h,min}$ = 1,2 mm. Für die Durchmischung wird eine konstante Umfangsgeschwindigkeit v von 2,09 m/s vorgegeben (in nachstehender Tabelle als vR bezeichnet).

Das erfindungsgemäße Verfahren ermöglicht es, wie innerhalb des Beispiels B2 und in nachstehender Tabelle veranschaulicht zu Beginn der Dosierung einen Unterspiegel von $U_s$ = 0 mm zu wählen und im Zuge einer automatisierten Durchführung des Schrittes (1) erst ab Erreichen eines Unterspiegels $U_s$ = 30 mm eine Anpassung von $R_h$ an den Füllstand $F_s$ vorzunehmen.

In dem vorliegenden Beispiel erfolgt eine Durchmischung erst nach einer mittels des erfindungsgemäßen Verfahrens ermöglichten automatisierten Plausibilitätsprüfung. Bei Zugabe der ersten 200 g der Verdickerlösung wird zunächst noch nicht durchmischt. In der Spalte "Rührer V Start?" ist dort entsprechend der Ausdruck "Nein" automatisch eingetragen gemäß einer hinterlegten Logikprüfung "Rührer V Start" = Ja, nur wenn $F_s$ >= $R_{h,min}$. Da aber die Zugabe der ersten 200 g einen Füllstand Fs < 12 mm ergeben, darf der Rührer nicht anlaufen, was entsprechend einer Steuerungslogik automatisch sichergestellt wird. Erst ab einer weiteren Zugabe von 100 g bis zur Gesamtmenge von 300 g wird die Bedingung für den zulässigen Start der Drehbewegung des Rührers $F_s \geq R_{h,min}$ bzw. $U_s \geq 0$ mm erfüllt. Ab 300 g Verdickerlösung wird dann mit konstanter Umfangsgeschwindigkeit v von 2,09 m/s durchmischt. In der Spalte "Rührer V Start?" ist dort entsprechend der Ausdruck "Ja" automatisch eingetragen. Damit kann auch diese Abfrage einfach in die entsprechende Steuerungslogik implementiert werden und automatisch freigeschaltet werden. Mit zunehmender Zugabe der Verdickerlösung erhöht sich der Füllstand $F_s$ im Behälter. Ab Erreichen eines Unterspiegels $U_s$ von 30 mm wird eine zweite für Rührprozesse relevante Plausibilitätsabfrage erfüllt, nämlich die Freigabe einer automatischen Verfahrbewegung der Rührerhöhe $R_h$ (X%) relativ zum jeweiligen vorherrschenden Füllstand $F_s$. Im vorliegenden Beispiel ist dies ab einer Zugabe von 600 g Verdickerlösung möglich und in der Spalte "Rh Verfahrbar?" dort entsprechend "Ja" nach automatischer Logikprüfung eingetragen. Dies kann ebenfalls entsprechend einer Steuerungslogik automatisch abgefragt und jetzt freigeschaltet werden.

Somit kann mittels des erfindungsgemäßen Verfahrens sowohl das jeweilig qualitativ notwendige Rühren vorgegeben werden, d.h. die Rührerhöhe prozentual zum Füllstand für eine Durchmischung von z.B. immer 50% oder immer 90% bei notwendigen Zugaben in eine Oberflächentrombe als auch alle sicherheitsrelevanten Plausibilitätsabfragen wie die Drehbewegung des Rührers (z.B. nur wenn $U_s$ mindestens $\geq 0$ und wenn Freigabe einer zulässigen automatischen Höhenverfahrbewegung gegeben ist, wie im Beispiel z.B. ab $U_s$ = 30 mm (3 cm) ab Zugabe von 600 g).

Tabelle: Zusatz einer Verdickerlösung

| g | ml | Fs theo [cm] | $R_h$ (-Rh min) | Ruhrer V Start ? | Rh Verfahrbar ? |
|---|---|---|---|---|---|
| 100 | 87 | 0,55 | -0,65 | NEIN | NEIN |
| 200 | 174 | 1,10 | -0,10 | NEIN | NEIN |
| 300 | 261 | 1,65 | 0,45 | Ja | NEIN |
| 400 | 348 | 2,20 | 1,00 | Ja | NEIN |
| 500 | 435 | 2,75 | 1,55 | Ja | NEIN |
| 600 | 522 | 3,29 | 2,09 | Ja | Ja |
| 700 | 609 | 3,84 | 2.64 | Ja | Ja |
| 800 | 696 | 4,39 | 3,19 | Ja | Ja |
| 900 | 783 | 4,94 | 3,74 | Ja | Ja |
| 1000 | 870 | 5,49 | 4,29 | Ja | Ja |
| 1100 | 957 | 6,04 | 4,84 | Ja | Ja |
| 1200 | 1.043 | 6,59 | 5,39 | Ja | Ja |
| 1300 | 1.130 | 7,14 | 5,94 | Ja | Ja |
| 1400 | 1.217 | 7,69 | 6,49 | Ja | Ja |

(fortgesetzt)

| g | ml | Fs theo [cm] | $R_h$ (-Rh min) | Ruhrer V Start ? | Rh Verfahrbar ? |
|---|---|---|---|---|---|
| 1500 | 1.304 | 8,24 | 7.04 | Ja | Ja |
| 1600 | 1.391 | 8,79 | 7,59 | Ja | Ja |
| 1700 | 1.478 | 9,33 | 8,13 | Ja | Ja |
| 1800 | 1.565 | 9,88 | 8,68 | Ja | Ja |
| 1900 | 1.652 | 10,43 | 9,23 | Ja | Ja |
| 2000 | 1.739 | 10,98 | 9,78 | Ja | Ja |
| 2100 | 1.826 | 11,53 | 10,33 | Ja | Ja |
| 2200 | 1.913 | 12,08 | 10,88 | Ja | Ja |
| 2300 | 2.000 | 12,63 | 11,43 | Ja | Ja |
| 2400 | 2.087 | 13,18 | 11,98 | Ja | Ja |
| 2500 | 2.174 | 13,73 | 12,53 | Ja | Ja |
| 2600 | 2.261 | 14,28 | 13,08 | Ja | Ja |
| 2700 | 2.348 | 14.83 | 13,63 | Ja | Ja |
| 2800 | 2.435 | 15,37 | 14,17 | Ja | Ja |

**Patentansprüche**

1. Ein Verfahren zur Herstellung einer in der Automobilindustrie einsetzbaren Beschichtungsmittelzusammensetzung oder einer Vorstufe davon, wobei das Verfahren wenigstens den Schritt 1 umfasst, nämlich 1 Einwiegen aller zur Herstellung der Beschichtungsmittelzusammensetzung oder der Vorstufe davon erforderlichen Komponenten unter Verwendung einer gravimetrischen Dosieranlage mittels wenigstens eines Dosierventils in einen für die Einwaage geeigneten Behälter,
   **dadurch gekennzeichnet, dass** die in den Behälter eingewogenen Komponenten während der Dauer der Durchführung von Schritt 1 mittels wenigstens eines Rührkörpers durchmischt werden und während der Durchführung von Schritt 1 eine kontinuierliche Anpassung der Position des wenigstens einen Rührkörpers an den jeweiligen Füllstand innerhalb des Behälters erfolgt, wobei der jeweilige Füllstand durch die Menge und Anzahl der in den Behälter eingewogenen Komponenten vorgegeben wird und die Position des wenigstens einen Rührkörpers der Höhe des Rührkörpers innerhalb des Behälters, gerechnet vom Boden des Behälters, entspricht.

2. Das Verfahren gemäß Anspruch 1, **dadurch gekennzeichnet, dass** die kontinuierliche Anpassung der Position des wenigstens einen Rührkörpers an den jeweiligen Füllstand innerhalb des Behälters automatisiert erfolgt.

3. Das Verfahren gemäß Anspruch 2, **dadurch gekennzeichnet, dass** die Automatisierung mittels Unterstützung einer Software erfolgt.

4. Das Verfahren gemäß einem der vorstehenden Ansprüche, **dadurch gekennzeichnet, dass** das Gewicht des eingesetzten Behälters und darin bereits eingewogener Komponenten zu jedem Zeitpunkt der Durchführung von Schritt 1 bestimmt wird.

5. Das Verfahren gemäß einem der vorstehenden Ansprüche, **dadurch gekennzeichnet, dass** der eingesetzte Behälter vor Durchführung von Schritt 1 ein ermitteltes und daher bekanntes Leergewicht aufweist.

6. Das Verfahren gemäß einem der vorstehenden Ansprüche, **dadurch gekennzeichnet, dass** die kontinuierliche Anpassung der Position des Rührkörpers an den jeweiligen Füllstand innerhalb des Behälters dadurch erfolgt, dass das jeweilige Gewicht von bereits in den Behälter eingewogener Komponenten zu jedem Zeitpunkt der Durchführung von Schritt 1 bestimmt wird und in Kenntnis der Geometrie des Innenraums des eingesetzten Behälters in den Füllstand innerhalb des Behälters zu jedem Zeitpunkt umgerechnet wird.

7. Das Verfahren gemäß einem der vorstehenden Ansprüche, **dadurch gekennzeichnet, dass** die kontinuierliche Anpassung der Position des Rührkörpers an den jeweiligen Füllstand innerhalb des Behälters dadurch erfolgt, dass (i) das jeweilige Gewicht des eingesetzten Behälters und darin bereits eingewogener Komponenten zu jedem Zeitpunkt der Durchführung von Schritt 1 bestimmt wird, (ii) dieses Gewicht abzüglich des bekannten Leergewichts des Behälters in ein Volumen der in dem Behälter befindlichen Komponenten umgerechnet wird und (iii) dieses Volumen in Kenntnis der Geometrie des Innenraums des eingesetzten Behälters wiederum in den Füllstand innerhalb des Behälters zu jedem Zeitpunkt umgerechnet wird.

8. Das Verfahren gemäß einem der vorstehenden Ansprüche, **dadurch gekennzeichnet, dass** der Rührkörper während der Dauer der Durchführung von Schritt 1 vollständig unterhalb des Füllstands positioniert ist.

9. Das Verfahren gemäß einem der vorstehenden Ansprüche, **dadurch gekennzeichnet, dass** der Rührkörper Teil eines Rührwerks ist, welches durch einen Motor ansteuerbar ist.

10. Das Verfahren gemäß einem der vorstehenden Ansprüche, **dadurch gekennzeichnet, dass** der Rührkörper an einer Rührwelle angebracht ist.

11. Das Verfahren gemäß Anspruch 10, **dadurch gekennzeichnet, dass** die Rührwelle höhenverstellbar ist.

12. Das Verfahren gemäß einem der vorstehenden Ansprüche, **dadurch gekennzeichnet, dass** die Einwaage gemäß Schritt 1 auf Grundlage eines elektronisch innerhalb einer Datenbank erstellten oder aus einer bestehenden Datenbank abgerufenen Rezeptes einer Zielformulierung erfolgt, welche der herzustellenden Beschichtungsmittelzusammensetzung oder der Vorstufe davon entspricht.

13. Das Verfahren gemäß einem der vorstehenden Ansprüche, **dadurch gekennzeichnet, dass** der Behälter auf seiner Außenseite ein elektronisch lesbares Etikett aufweist, welches die Information des Leergewichts des Behälters und/oder Informationen zur Geometrie des Innenraums des eingesetzten Behälters und/oder des Volumens des Innenraums des eingesetzten Behälters enthält.

14. Das Verfahren gemäß einem der vorstehenden Ansprüche, **dadurch gekennzeichnet, dass** Schritt 1 bei konstanter Drehzahl und/oder Umfangsgeschwindigkeit durchgeführt wird.

15. Das Verfahren gemäß einem der vorstehenden Ansprüche, **dadurch gekennzeichnet, dass** das Verfahren ein Verfahren zur Herstellung eines Wasserbasislacks ist.

**Claims**

1. Method for preparing a coating material composition or a precursor thereof that can be used in the automobile industry, the method comprising at least step 1, that is

   1

   weighing out all the components required for preparing the coating material composition or the precursor thereof into a container suitable for weighing them out by means of at least one metering valve when using a gravimetric metering system,
   **characterized in that** the components that are weighed out into the container are mixed by means of at least one stirring body throughout the course of carrying out step 1 and a continuous adaptation of the position of the at least one stirring body to the respective filling level within the container takes place throughout the course of carrying out step 1, the respective filling level being predetermined by the amount and number of components that are weighed out into the container and the position of the at least one stirring body corresponding to the height of the stirring body within the container, calculated from the bottom of the container.

2. Method according to Claim 1, **characterized in that** the continuous adaptation of the position of the at least one stirring body to the respective filling level within the container is performed in an automated manner.

3. Method according to Claim 2, **characterized in that** the automation is performed by means of software support.

4. Method according to one of the preceding claims, **characterized in that** the weight of the container used and the components already weighed out into it is determined at all times during the course of carrying out step 1.

5. Method according to one of the preceding claims, **characterized in that** the container used has an empty weight that is determined before carrying out step 1, and is therefore known.

6. Method according to one of the preceding claims, **characterized in that** the continuous adaptation of the position of the stirring body to the respective filling level within the container takes place by the respective weight of components that have already been weighed out into the container being determined at all times throughout the course of carrying out step 1 and, with knowledge of the geometry of the interior space of the container used, converted into the filling level within the container at every time.

7. Method according to one of the preceding claims, **characterized in that** the continuous adaptation of the position of the stirring body to the respective filling level within the container takes place by (i) the respective weight of the container used and the components already weighed out into it being determined at all times throughout the course of carrying out step 1, (ii) this weight minus the known empty weight of the container being converted into a volume of the components that are in the container and (iii) with knowledge of the geometry of the interior space of the container used, this volume in turn being converted into the filling level within the container at every time.

8. Method according to one of the preceding claims, **characterized in that** the stirring body is positioned completely below the filling level throughout the entire time when step 1 is carried out.

9. Method according to one of the preceding claims, **characterized in that** the stirring body is part of a stirring mechanism, which can be activated by a motor.

10. Method according to one of the preceding claims, **characterized in that** the stirring body is attached to a stirring shaft.

11. Method according to Claim 10, **characterized in that** the stirring shaft is adjustable in height.

12. Method according to one of the preceding claims, **characterized in that** the weighing out according to step 1 is performed on the basis of a formula of a target formulation, which is created electronically within a database or retrieved from an existing database and corresponds to the coating material composition or the precursor thereof that is to be prepared.

13. Method according to one of the preceding claims, **characterized in that** the container has on its outer side an electronically readable label, which contains the information of the empty weight of the container and/or items of information concerning the geometry of the interior space of the container used and/or the volume of the interior space of the container used.

14. Method according to one of the preceding claims, **characterized in that** step 1 is carried out at a constant rotational speed and/or circumferential speed.

15. Method according to one of the preceding claims, **characterized in that** the method is a method for preparing a water-based paint.

## Revendications

1. Procédé de fabrication d'une composition d'agent de revêtement utilisable dans l'industrie automobile ou d'un précurseur de celle-ci, le procédé comprenant au moins l'étape 1, à savoir

> 1 la pesée de tous les composants nécessaires à la fabrication de la composition d'agent de revêtement ou du précurseur de celle-ci, en utilisant une installation de dosage gravimétrique au moyen d'au moins une soupape de dosage, dans un récipient approprié pour la pesée,
> **caractérisé en ce que** les composants pesés dans le récipient sont mélangés au moyen d'au moins un corps d'agitation pendant la durée de la réalisation de l'étape 1 et, pendant la réalisation de l'étape 1, une adaptation continue de la position de l'au moins un corps d'agitation au niveau de remplissage respectif à l'intérieur du récipient a lieu, le niveau de remplissage respectif étant prédéterminé par la quantité et le nombre des composants pesés dans le récipient et la position de l'au moins un corps d'agitation correspondant à la hauteur du corps d'agitation à l'intérieur du récipient, calculée à partir du fond du récipient.

2. Procédé selon la revendication 1, **caractérisé en ce que** l'adaptation continue de la position de l'au moins un corps d'agitation au niveau de remplissage respectif à l'intérieur du récipient a lieu de manière automatisée.

3. Procédé selon la revendication 2, **caractérisé en ce que** l'automatisation a lieu à l'aide d'un logiciel.

4. Procédé selon l'une quelconque des revendications précédentes, **caractérisé en ce que** le poids du récipient utilisé et des composants déjà pesés dans celui-ci est déterminé à chaque moment de la réalisation de l'étape 1.

5. Procédé selon l'une quelconque des revendications précédentes, **caractérisé en ce que** le récipient utilisé présente avant la réalisation de l'étape 1 un poids à vide déterminé et par conséquent connu.

6. Procédé selon l'une quelconque des revendications précédentes, **caractérisé en ce que** l'adaptation continue de la position du corps d'agitation au niveau de remplissage respectif à l'intérieur du récipient a lieu de telle sorte que le poids respectif des composants déjà pesés dans le récipient est déterminé à chaque moment de la réalisation de l'étape 1 et, en connaissant la géométrie de l'espace intérieur du récipient utilisé, est converti en le niveau de remplissage à l'intérieur du récipient à chaque moment.

7. Procédé selon l'une quelconque des revendications précédentes, **caractérisé en ce que** l'adaptation continue de la position du corps d'agitation au niveau de remplissage respectif à l'intérieur du récipient a lieu de telle sorte que (i) le poids respectif du récipient utilisé et des composants déjà pesés dans celui-ci est déterminé à chaque moment de la réalisation de l'étape 1, (ii) ce poids, déduction faite du poids à vide connu du récipient, est converti en un volume des composants se trouvant dans le récipient, et (iii) ce volume, en connaissant la géométrie de l'espace intérieur du récipient utilisé, est à son tour converti en le niveau de remplissage à l'intérieur du récipient à chaque moment.

8. Procédé selon l'une quelconque des revendications précédentes, **caractérisé en ce que** le corps de remplissage est positionné entièrement en dessous du niveau de remplissage pendant la durée de la réalisation de l'étape 1.

9. Procédé selon l'une quelconque des revendications précédentes, **caractérisé en ce que** le corps de remplissage fait partie d'un agitateur, qui peut être actionné par un moteur.

10. Procédé selon l'une quelconque des revendications précédentes, **caractérisé en ce que** le corps d'agitation est disposé sur un arbre d'agitation.

11. Procédé selon la revendication 10, **caractérisé en ce que** l'arbre d'agitation est réglable en hauteur.

12. Procédé selon l'une quelconque des revendications précédentes, **caractérisé en ce que** la pesée selon l'étape 1 a lieu sur la base d'une recette d'une formulation cible, élaborée électroniquement dans une base de données ou récupérée à partir d'une base de données existante, qui correspond à la composition d'agent de revêtement à fabriquer ou au précurseur de celle-ci.

13. Procédé selon l'une quelconque des revendications précédentes, **caractérisé en ce que** le récipient comprend sur son côté extérieur une étiquette lisible électroniquement, qui contient les informations du poids à vide du récipient et/ou des informations sur la géométrie de l'espace intérieur du récipient utilisé et/ou du volume de l'espace intérieur du récipient utilisé.

14. Procédé selon l'une quelconque des revendications précédentes, **caractérisé en ce que** l'étape 1 est réalisée à vitesse de rotation et/ou vitesse circonférentielle constante.

15. Procédé selon l'une quelconque des revendications précédentes, **caractérisé en ce que** le procédé est un procédé de fabrication d'un vernis à base d'eau.

Fig. 1

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013098913 A1